# EUROPEAN PATENT APPLICATION

(11) **EP 1 901 473 A2**
(43) Date of publication of application: **19.03.2008**
(21) Application number: 07109734.9
(22) Date of filing: 06.06.2007
(51) Int. Cl.: H04L 7/00, H04L 1/00, G06F 13/42

(54) **Communication method for improving communication error and electronic device using the same**

(30) Priority: 18.09.2006 KR 20060090044
(71) Applicant: SAMSUNG ELECTRONICS CO., LTD., Suwon-si, Gyeonggi-do 442-742 (KR)
(72) Inventor: Park, Han-jin, Gwonseon-gu, Suwon-si, Gyeonggi-do (KR)
(74) Representative: Clark, David James

(57) **Abstract**

A communication method for improving a communication error and an electronic device using the same are provided. The electronic device according to the exemplary embodiment of the present invention includes a plurality of slaves (200-1, 200-n), and a master(100) which generates clocks required in data communications with the slaves in accordance with the slave working time information, and provides the clocks to the slaves (200-1, 200-n). The slave working time is the time a slave takes to handle commands issued by the master (100). Accordingly, the occurrence of communication errors between master/slave pairs can be reduced.

## Description

Apparatuses and methods consistent with the present invention relate to a communication methods for improving a communication error and electronic devices using the same.

I2C (referred to as Inter-IC or I-square-C) communication is a serial communication method originally developed by Philips for data communication between Integrated Circuits (ICs), in which a device initiating a transaction or communication, termed a master, controls many slaves through two signal lines.

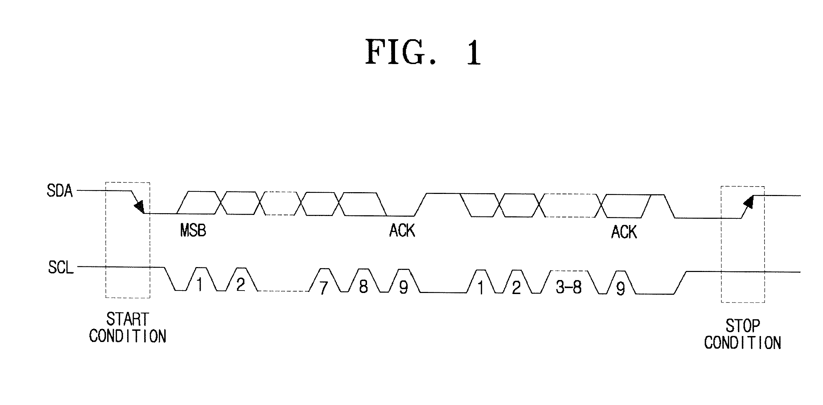

FIG. 1 is a drawing for explaining the basic protocol used in I2C communications.
Referring to FIG. 1, the signal lines used in I2C communications are the serial data (SDA) line and the serial clock (SCL) line. The SDA line is for data transactions between master/slave pairs, and the SCL line is for transmission of a clock signal required in data transmission.

If the level of the SDA changes from high to low while the SCL is maintained at a high level, the master begins transmitting data to the slaves by issuing the start condition. On the other hand, if the level of the SCL changes from low to high while the SDA is maintained at a high level, the master stops the transmitting data to the slaves by issuing the stop condition.

When the master completes the 7-bit data transmission, with the Most Significant Bit (MSB) first, it holds the SDA high on the 9^{th} clock. If the slave received an 8-bit data from the master, it changes the level of the SDA on the 9^{th} clock to low and issues an acknowledging receipt (hereinafter, referred to as an ACK signal) to the master.

When the slave performs a process (or task) for a command transmitted from the master, the SCL is sometimes forcibly pulled down to a low level, resulting in a communication error between the master and the slave. In some cases, a slave or the entire set malfunctions by recognizing the 9^{th} clock cycle during which the ACK signal is transmitted as the start condition.

Exemplary embodiments of the present invention aim to overcome the above disadvantages and other disadvantages not described above.

According to an aspect of the present invention, there is provided an electronic device, comprising: a plurality of slaves; and a master which generates clocks required in data communications with the slaves in accordance with information on slave working time taken for the slaves to handle commands issued by the master, and which provides the clocks to the slaves.

Suitably, the master may generate a clock adjusted to the information of the working time of a slave among the plurality of slaves, which is involved with a communication error, to thereby receive an acknowledge (ACK) signal from the slave.

In addition, the master may hold a clock required for receiving the ACK signal at a low level during the slave working time, and then change the level of the clock from low to high.

The electronic device according to an aspect of the present invention may further comprise a storage unit which stores the working time information of the slave involved with the communication error.

The master may check a serial clock (SCL) line to thereby decide whether a communication error has occurred.

Moreover, the master may suitably decide that the communication error has occurred if clocks required for receiving ACK signals from the slaves are kept at a low level during the time corresponding to the working time information.

In addition, the master checks the SCL for a predetermined number of times to thereby decide whether a communication error has occurred.

According to another aspect of the prevent invention, there is provided a master communicating with a plurality of slaves, the master comprising: a data generation unit which generates data to be provided to the slaves; a clock generation unit which transfers clocks to the slaves, the clocks being required for providing the data; and a control unit which controls the clock generation unit to generate clocks according to information on working time taken for the slaves to handle commands issued by the master.

Suitably, the control unit may control the clock generation unit to adjust a clock according to the information of the working time of a slave among the plurality of slaves, which is involved with a communication error, to thereby receive an acknowledge (ACK) signal from the slave.

In addition, the control unit may control the clock generation unit to hold a clock required for receiving the ACK signal at a low level for the slave working time, and then to change the level of the clock from low to high.

Suitably, the master according to another aspect of the present invention further comprises a storage unit which stores the working time information of the slave involved with the communication error.

Suitably, master according to an aspect of the present invention further comprises an error sensing unit which checks a serial clock (SCL) line to thereby decide whether a communication error has occurred, and transfers the decision result to the control unit.

The error sensing unit may decide that the communication error has occurred if clocks required for receiving ACK signals from the slaves are kept at a low level during the time corresponding to the working time information.

Moreover, the error sensing unit may check the SCL for a predetermined number of times, to thereby decide the communication error.

According to still another aspect of the prevent invention, there is provided a communication method between a master and a plurality of slaves, comprising: generating clocks required in data communications with the slaves in accordance with information on slave working time taken for the slaves to handle commands issued by the master, providing the clocks to the slaves; and performing data communications between the master and the slaves, according to the clocks.

Suitably, in generating the clocks, a clock is adjusted to the information of the working time of a slave among the plurality of slaves, which is involved with a communication error, to thereby enable the master to receive an acknowledge (ACK) signal from the slave.

Suitably, for generating the clocks, a clock required for receiving the ACK signal is kept at a low level for the slave working time, and then changed to a high level.

The communication method according to an aspect of the present invention may further comprises storing the working time information of the slave involved with the communication error.

The communication method may further comprise checking, in the master, a serial clock (SCL) line through which clocks are provided to the slaves, to thereby decide whether a communication error has occurred.

The decision regarding an occurrence of the communication error is suitably made if clocks required for receiving ACK signals from the slaves are kept at a low level during the time corresponding to the working time information.

In addition, the SCL may suitably be checked for a predetermined number of times to thereby decide the communication error.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a drawing for explaining a basic protocol used in related art I2C communications;
FIG. 2 is a schematic block diagram of an electronic device using a communication method according to an exemplary embodiment of the present invention;
FIG. 3A is a diagram for explaining a method for determining the working time of a slave in the electronic device using a communication method according to an exemplary embodiment of the present invention;
FIG. 3B is a diagram showing a clock to which the slave working time obtained in FIG. 3A is applied; and
FIG. 4 is a flow chart for use in a description of an operation of the electronic device using a communication method according to an exemplary embodiment of the present invention.

Exemplary embodiments of the present invention will be described in detail with reference to the annexed drawings.

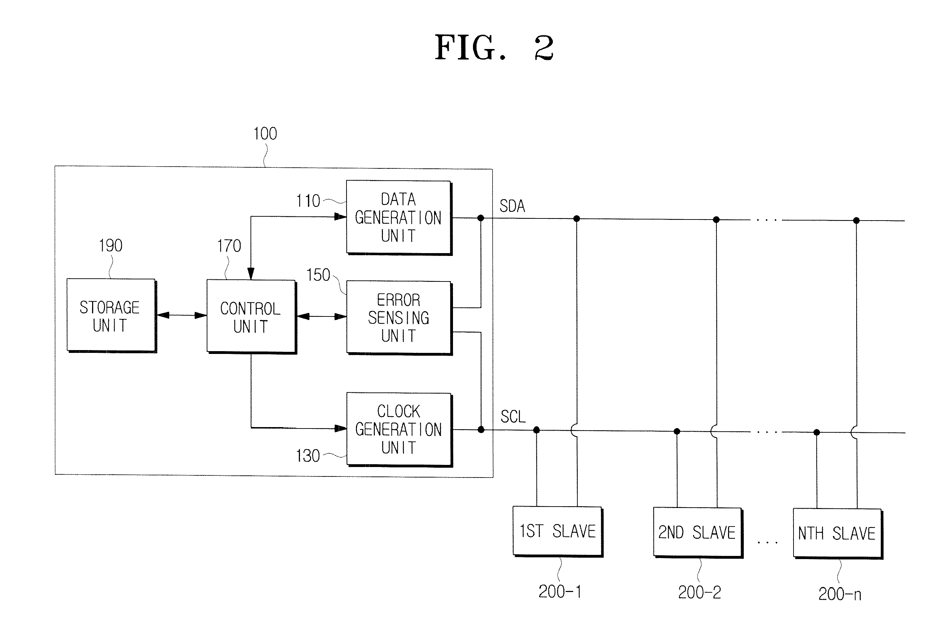

FIG. 2 is a schematic block diagram of an electronic device using a communication method according to an exemplary embodiment of the present invention.

Referring to FIG. 2, the electronic device comprises a master 100 and a plurality of slaves 200-1, 200-2, ... and 200-n.

The master 100 performs data communications with the plurality of slaves 200-1, 200-2, ... and 200-n through the serial data (SDA) and serial clock (SCL) lines. A serial data format transmitted through the SDA line consists of 9-bit data, the 9-bit data being composed of an 8-bit data and a 1-bit Acknowledge (ACK) signal. The SCL line is used for providing the clock signal required in data transmission through the SDA line, according to the slave working time (hereinafter, referred to as SWT) of each of the plurality of slaves 200-1, 200-2, ..., and 200-n.

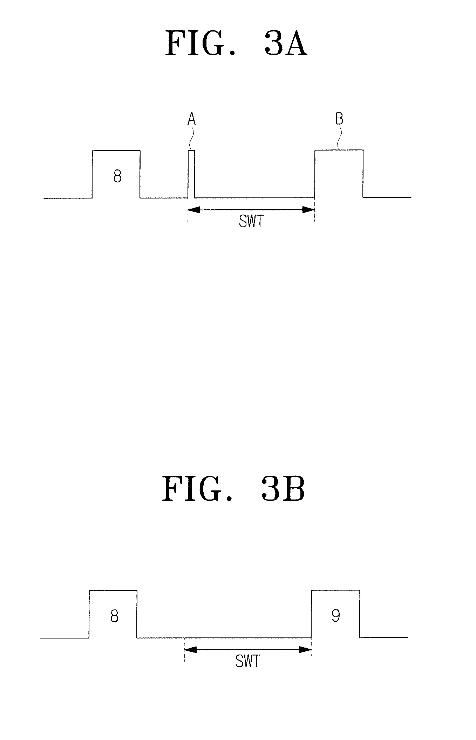

Here, the SWT is a certain amount of time required for a slave to handle a command issued by the master 100. A method of calculating SWT will be explained in detail using FIGS. 3A and 3B.

In FIG. 2, the master 100 comprises a data generation unit 110, a clock generation unit 130, an error sensing unit 150, a control unit 170 and a storage unit 190.

The data generation unit 110 generates data to be transmitted through the SDA line to each of the plurality of slaves 200-1, 200-2, ... and 200-n. That is, the data generation unit 110 changes the level of the SDA line from high to low to thereby generate data corresponding to '1' and `0.'

The clock generation unit 130 changes the level of the SCL line from high to low, to thereby generate a synchronization clock that the plurality of slaves 200-1, 200-2, ... and 200-n need to read out data.

The error sensing unit 150 receives ACK signals from the plurality of slaves 200-1, 200-2, ... and 200-n and transmits them to the control unit 170 described below. In addition, the error sensing unit 150 checks the state of the 9^{th} clock, being provided to a certain slave through the SCL line to sense a communication error, and transmits the state to the control unit 170. Specifically, if the 9^{th} clock required for the master 100 to receive an ACK signal is pulled down to a low level during the SWT, the error sensing unit 150 decides that a communication error has occurred between the master and a corresponding slave and informs the control unit 170 as to this fact.

The control unit 170 controls the data generation unit 110 to generate commands in data form for controlling the plurality of slaves 200-1, 200-2, ... and 200-n, and controls the clock generation unit 130 to generate a synchronization clock required for reading out the data. Moreover, the control unit 170 decides, based on an ACK signal received from the error sensing unit 150, whether the plurality of slaves 200-1, 200-2, ... and 200-n have duly received the commands.

Further, if the information related to a communication error is provided from the error sensing unit 150, the control unit 170 determines which slave caused the communication error by referring to the slave's address. For example, while the master 100 transmits a command to the second slave 200-2 and receives an ACK signal from the second slave 200-2 through the SDA line, the error sensing unit 150 checks the state of the SCL line. Here, if the 9^{th} clock is kept at a low level for longer than a predetermined period of time, the error sensing unit 150 decides that a communication error has occurred and informs the control unit 170.

At this time, the control unit 170 decides whether the SWT information of the second slave 200-2 involved with the communication error, is stored in the storage unit 190, and controls the clock generation unit 130 to adjust the a clock signal to be provided to the second slave 200-2 according to the stored SWT information.

Meanwhile, if the SWT information is not stored in the storage unit 190, the control unit 170 obtains the SWT information of the second slave 200-2 and stores it in the storage unit 190. Here, even if the SWT information of the slave involved with the communication error has been stored in the storage unit 190, the corresponding SWT information may be changed by environmental factors such as temperature, humidity and the like. In such case, the control unit 170 may update the unstable SWT information of a slave and store the updated SWT information in the storage unit 190. Moreover, when a new slave is added to the electronic device, the control unit 170 may obtain SWT information of the newly added slave and store it in the storage unit 190.

As explained above, the storage unit 190 stores SWT information of each of the slaves 200-1, 200-2, ... and 200-n. Part of the SWT information is stored in the electronic device in the development phase, and may be updated later. SWT information of a newly added slave may also be stored in the storage unit 190.

FIG. 3A is a diagram for explaining a method for calculating the SWT information in the electronic device using the communication method according to an exemplary embodiment of the present invention.

In particular, FIG. 3A illustrates the 8^{th} clock and the 9^{th} clock among the clocks provided to the second slave 200-2 through the SCL line. In this example, the second slave 200-2 is assumed to be involved with the communication error.

When the master 100 is done with the 8-bit data transmission at the end of the 8^{th} clock, the master 100 generates the 9^{th} clock A of a high level for receiving an ACK signal from the second slave 200-2. At this time, the second slave 200-2 holds the 9^{th} clock A at a low level during the SWT and then changes it to a high level B.

After generating the 9^{th} clock A, the control unit 170 checks the time taken for the second slave 200-2 to change the 9^{th} clock A to the high level B, namely, the time during which the 9^{th} clock is kept at a low level, and stores the result in the storage unit 190 as SWT information. Further, the control unit 170 controls the clock generation unit 130 to generate and provide the second slave 200-2 with a clock, as shown for example in FIG. 3B, to which the SWT obtained in FIG. 3A is applied.

FIG. 3B is a diagram showing a clock to which the SWT information obtained in FIG. 3A is applied. As shown in FIG. 3B, the control unit 170 controls the clock generation unit 130 to hold the 9^{th} clock provided to the second slave 200-2 at a low level during the calculated SWT. At this time, the control unit 170 controls the data generation unit 110 not to provide data to the slaves 200-1, 200-2, ... and 200-n during the SWT.

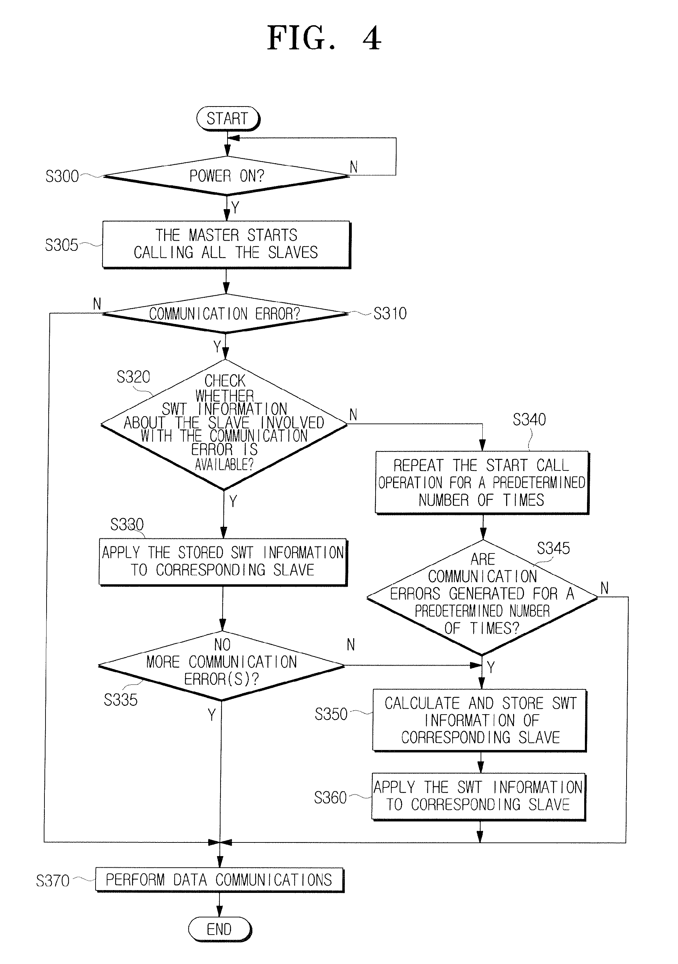

FIG. 4 is a flow chart for explaining an operation of the electronic device incorporating the communication method according to an exemplary embodiment of the present invention.

According to FIG. 4, when a power supply device is turned ON (S300), the master 100 starts calling all the slaves 200-1, 200-2, ..., and 200-n (S305). Specifically, the master 100 transmits addresses and commands to the plurality of slaves 200-1, 200-2, ... and 200-n, to thereby check whether they are in operating mode.

If a communication error occurs (S310), that is, if the error sensing unit 150 used the SCL line to check whether the 9^{th} clock had been at a low level for a predetermined period of time and then detected a communication error, the error sensing unit 150 informs the control unit 170.

The control unit 170 checks whether SWT information of the slave involved with the communication error is stored in the storage unit 190 (S320). If no information is stored, the control unit 170 repeats the start call operation for a predetermined number of times (S340). If the communication error occurs for a predetermined number of times (S345), the control unit 170 calculate the SWT information of the corresponding slave and stores that information in the storage unit 190 (S350).

Next, the SWT information is applied to the corresponding slave (S360), and the master 100 performs data communications (S370). Specifically, the control unit 170 controls the clock generation unit 130 to generate a clock after holding the 9^{th} clock among the clocks provided to the corresponding slave at a low level for the duration of the SWT, and controls the data generation unit 110 so as not to provide data to the plurality of slaves 200-1, 200-2, ... and 200-n during the SWT.

In operation S320, if the SWT information of the slave involved with the communication error is stored in the storage unit 190, the control unit 170 applies the stored SWT information to a corresponding slave (S330). And, if the communication error(s) no longer occurs (S335), data communications are performed (S370). However, if the communication error(s) continue to occur at operation S335, the control unit 170 calculates SWT information of the corresponding slave and stores it in the storage unit 190 (S350), applies the SWT information to the corresponding slave (S360), thereby enabling the master 100 to perform data communications (S370).

In operation S345, if the communication error(s) does not occur for a predetermined number of times, the master 100 performs data communications with the plurality of slaves 200-1, 200-2, ... and 200-n as usual (S370). In one exemplary embodiment, the number of the start call operations being repeated is preset and stored in the development phase of the electronic device.

Through the above-described procedure, it becomes possible to reduce the occurrence of communication errors between master/slave pairs.

As explained so far, the master (the electronic device using I2C protocol as suggested in an exemplary embodiment of the present invention) provides clocks that are adjusted according to the working time of a corresponding slave. Therefore, communication errors occurring between the master and the slaves can be substantially reduced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electronic device, comprising:
a plurality of slaves (200-1, 200-n); and
a master (100) which generates clocks required in data communications with the plurality of slaves (200-1, 200-n) in accordance with information on slave working times taken by the plurality of slaves (200-1, 200-n) to handle commands issued by the master (100), and which provides the clocks to the plurality of slaves (200-1, 200-n).

2. The electronic device as claimed in claim 1, wherein the master (100) generates a clock adjusted to slave working time information of a first slave (200-1) involved with a communication error among the plurality of slaves, to thereby receive an acknowledge (ACK) signal from the first slave (200-1).

3. The electronic device as claimed in claim 2, wherein the master (100) holds the clock at a low level for the working time of a first slave (200-1), and then changes a level of the clock from low to high.

4. The electronic device as claimed in claim 1, 2 or 3, wherein the master (100) comprises:
a storage unit (190) which stores slave working time information.

5. The electronic device as claimed in any one of claims 1-4, wherein the master (100) checks a serial clock (SCL) line, to decide whether a communication error has occurred.

6. The electronic device as claimed in any one of claims 1-5, wherein the master (100) decides that the communication error has occurred if clocks for receiving ACK signals from the slaves are at a low level during time corresponding to the information on slave working times.

7. The electronic device as claimed in any one of claims 1-6, wherein the master checks a SCL line for a predetermined number of times, to thereby decide whether the communication error has occurred.

8. A master (100) communicating with a plurality of slaves (200-1, 200-n), the master (100) comprising:
a data generation unit (110) which generates data to be provided to the plurality of slaves (200-1, 200-n);
a clock generation unit (130) which transfers clocks to the plurality of slaves (200-1, 200-n), the clocks being required for providing the data; and
a control unit (170) which controls the clock generation unit (130) to generate clocks according to information on working times taken by the plurality of slaves (200-1, 200-n) to handle commands issued by the master (100).

9. The master (100) as claimed in claim 8, wherein the clock generation unit (130) adjusts a clock according to slave working time information of a first slave (200-1) involved with a communication error among the plurality of slaves (200-1, 200-n), to thereby receive an acknowledge (ACK) signal from the first slave (200-1).

10. The master (100) as claimed in claim 9, wherein the control unit (170) controls the clock generation unit (130) to hold the clock for receiving the ACK signal at a low level for a first slave working time, and then to change a level of the clock from low to high.

11. The master (100) as claimed in claim 8, 9 or 10, further comprising:
a storage unit (190) which stores slave working time information.

12. The master (100) as claimed in claim 8, 9, 10 or 11, further comprising:
an error sensing unit (150) which checks a serial clock (SCL) line to decide whether a communication error has occurred, and transfers the decision result to the control unit (170).

13. The master (100) as claimed in claim 12, wherein the error sensing unit (150) decides that the communication error has occurred if clocks for receiving ACK signals from the slaves are at a low level during time corresponding to the information on slave working times.

14. The master as claimed in claim 12 or 13, wherein the error sensing unit (150) checks a SCL line for a predetermined number of times, to decide whether the communication error has occurred.

15. A communication method between a master (100) and a plurality of slaves (200-1, 200-n), comprising:
generating clocks required in data communications with the plurality of slaves (200-1, 200-n) in accordance with information on slave working times taken by the plurality of slaves to handle commands issued by the master (100);
providing said clocks to the plurality of slaves (200-1, 200-n); and
performing data communications between the master and the plurality of slaves (200-1, 200-n), according to the clocks.

16. The communication method according to claim 15, wherein a clock is adjusted to slave working time information of a first slave (200-1) involved with a communication error among the plurality of slaves (200-1, 200-n), to thereby enable the master (100) to receive an acknowledge (ACK) signal from the first slave (200-1).

17. The communication method according to claim 16, wherein the clock for receiving the ACK signal is kept at a low level for a first slave working time, and then changed to a high level.

18. The communication method according to claim 15, 16 or 17, further comprising:
storing the slave working time information of the first slave (200-1) involved with the communication error.

19. The communication method according to claim 15, 16, 17 or 18, further comprising:
the master (100) checking a serial clock (SCL) line through which the clocks are provided to the plurality of slaves (200-1, 200-n), to decide whether a communication error has occurred.

20. The communication method according to any one of claims 15-19, wherein the communication error exists if clocks for receiving ACK signals from the plurality of slaves (200-1, 200-n)are kept at a low level for time corresponding to the information on slave working times.

21. The communication method according to any one of claims 15-20, wherein a SCL line is checked for a predetermined number of times to decide whether the communication error has occurred.
